# EUROPÄISCHE PATENTSCHRIFT

(11) **EP 3 807 119 B1**
(45) Veröffentlichungstag und Bekanntmachung des Hinweises auf die Patenterteilung: **12.04.2023**
(21) Anmeldenummer: 19727633.0
(22) Anmeldetag: 27.05.2019
(51) Int. Cl.: G06F 3/01, G06F 3/042, B60K 37/06, B60K 35/00, G03H 1/00

(54) **VERFAHREN ZUM BETREIBEN EINER ANZEIGE- UND BEDIENVORRICHTUNG, ANZEIGE- UND BEDIENVORRICHTUNG, UND KRAFTFAHRZEUG**
METHOD FOR OPERATING A DISPLAY AND INPUT DEVICE, DISPLAY AND INPUT DEVICE, AND MOTOR VEHICLE
PROCÉDÉ POUR FAIRE FONTIONNER UN DISPOSITIF D'AFFICHAGE ET D'ENTREE, DISPOSITIF D'AFFICHAGE ET D'ENTREE ET VÉHICULE À MOTEUR

(30) Priorität: 13.06.2018 DE 102018209400
(43) Veröffentlichungstag der Anmeldung: 21.04.2021
(73) Patentinhaber: Audi AG, 85045 Ingolstadt (DE)
(72) Erfinder: HÉLOT, Jacques, 85051 Ingolstadt (DE)
(74) Vertreter: Hofstetter, Schurack & Partner
(86) Internationale Anmeldenummer: PCT/EP2019/063612
(87) Internationale Veröffentlichungsnummer: WO 2019/238397

(56) Entgegenhaltungen:
- DE-A1-102015 009 031
- DE-A1-102015 213 424
- DE-A1-102016 208 095
- DE-A1-102017 116 008
- US-A1- 2004 095 315
- Anonymous: "Holografie - Wikipedia", , 3 March 2022 (2022-03-03), XP55900180, Retrieved from the Internet: URL:https://de.wikipedia.org/wiki/Holograf ie#Amplituden-_und_Phasenhologramme [retrieved on 2022-03-11]
- Park Jongchan ET AL: "Ultrathin wide-angle large-area digital 3D holographic display using a non-periodic photon sieve | Nature Communications", Nature Communications, 21 March 2019 (2019-03-21), XP55900300, DOI: 10.1038/s41467-019-09126-9 Retrieved from the Internet: URL:https://www.nature.com/articles/s41467 -019-09126-9 [retrieved on 2022-03-11]

## Beschreibung

Die Erfindung betrifft ein Verfahren zum Betreiben einer Anzeige- und Bedienvorrichtung, also zum Betreiben eines Geräts oder eine Gerätekomponente zum Anzeigen von Bildinhalten. Die Erfindung betrifft ebenfalls eine entsprechende Anzeige- und Bedienvorrichtung, mit der dreidimensionale, reelle Bilder angezeigt werden können. Die Erfindung betrifft ebenfalls ein Kraftfahrzeug mit einer solchen Anzeige- und Bedienvorrichtung.

Vor allem in Kraftfahrzeugen nimmt eine Anzahl von Fahrzeugeinstellungen und Komfortsystemen stetig zu. Zum Bedienen eines Systems, insbesondere eines Kraftfahrzeugsystems, werden Bedieneinrichtungen verwendet, also Geräte oder Gerätekomponenten zum Bereitstellen einer Bedienhandlung und zum Erzeugen eines entsprechenden Bediensignals zum Auslösen einer Funktion. Wünschenswert sind jedoch Anzeigevorrichtungen, die mehrere Bildschirme aufweisen, sodass dem Benutzer zum Beispiel ein Benutzermenü oder Informationen oder andere Bildinhalte zugänglich gemacht werden und für den Benutzer sichtbar sind. In Kraftfahrzeugen sind die Bildschirme üblicherweise in einer Mittelkonsole und/oder in einer Schalttafel verbaut, gegebenenfalls auch an anderen Stellen.

Moderne Kombinationen von Anzeigevorrichtung und Bedienvorrichtung weisen dabei vorzugsweise einen berührungssensitiven Bildschirm auf, einen sogenannten "Touchscreen". Ebenfalls werden häufig Touchpads, also berührungsempfindliche Flächen, verbaut, und über einen von dem Touchpad räumlich getrennten Bildschirm kann beispielsweise ein Bedienmenü angezeigt werden. Diese verlangt von einem Benutzer, dass er die Hand zu der Berührung sensitive Fläche oder zu dem berührungssensitiven Bildschirm streckt.

Bedienkonzepte auf Displays sind immer zweidimensional oder auf Ebenen beschränkt. Wenn alles auf einer Ebene ist, ist es schwieriger Inhalte zu finden. Bei einem Konzept auf Ebenen ist man auf eine gewisse Anzahl von Ebenen beschränkt. Außerdem sind Bildschirme mit zwei Ebenen bekannt, sowie eine Spiegelkombination mit mehreren virtuellen Ebenen.

In manchen Situationen kann die Bedienung zudem nicht sehr einfach sein, weil zum Beispiel der Bildschirm oder das Touchpad so weit von dem Benutzer entfernt sind, dass der sich zum Beispiel zu Seite beugen muss. Insbesondere während einer Fahrt in ein Kraftfahrzeug ist es jedoch wünschenswert, dass der Fahrer bequem und möglichst aufrecht sitzt.

Die DE 10 2015 213 424 A1 beschreibt ein Bediensystem zum Bedienen mindestens einer Funktion in einem Innenraum eines Fahrzeugs. Das Bediensystem umfasst einen Darstellungsgenerator, der nach Aktivierung eines der mindestens einen Funktion zugeordneten Darstellung bereits im Innenraum des Fahrzeugs zu holographischen Darstellung mindestens eines der mindestens einen Funktion zugeordneten, virtuellen Bedienelements in den der mindestens eine Funktion zugeordneten Darstellungsbereich in dem Innenraum des Fahrzeugs konfiguriert ist.

Aus der DE 10 2011 112 448 A1 ist ein Verfahren zum Bereitstellen einer Nutzerschnittstelle bekannt, bei dem ein oder mehrere grafische Objekte auf einer Anzeigefläche einer berührungsempfindlichen Oberfläche dargestellt werden, eine einem Bedienbereich der Anzeigefläche zuordenbaren Bedienabsicht berührungslos in einem Raum in der Betrachtungsrichtung vor der Anzeigefläche erfasst wird und eine Bedienaktion durch Berühren eines der grafischen Objekte in dem Bedienbereich der Anzeigefläche durchgeführt wird.

Die US 2011/0320969 A1 beschreibt ein dreidimensionales Objekt verarbeitendes Gerät. Das Gerät ist in der Lage, mit einem Benutzer zu interagieren und nutzt einen stereoskopischen Effekt einer 3D-Benutzerschnittstelle als Information.

US 2004 / 095 315 A1 offenbart ein virtuelles holographisches Eingabeverfahren, bei dem der Unterschied zwischen einem projizierten Interferenzmuster und einem gemessenen Interferenzmuster zur Bestimmung der Art und des Ortes einer Nutzereingabe verwendet wird.

DE 10 2017 116 008 A1 offenbart ein Ultraschall-Haptiksteuersystem, bei dem Ultraschallwellen in ein Projektionsvolumen fokussiert werden, um dort eine oder mehrere Haptiksteuerflächen zu bilden.

Ein stereoskopisches Verfahren ermöglicht die Wiedergabe von Bildern mit einem räumlichen Eindruck der Tiefe, die physikalisch nicht vorhanden sind. Mit anderen Worten kann durch ein stereoskopisches Verfahren ein zweidimensionales Raumbild ermöglicht werden. Der Benutzer braucht zum Erkennen des Raumbildes ein Hilfsmittel, eine 3D-Brille, mit deren Hilfe sich im Gehirn zwei Bilder zu dem dreidimensionalen Eindruck zusammenfügen. Bei einem Raumbild spielt also der Augenabstand des Betrachters eine Rolle. Außerdem können solche stereoskopische Bilder nicht von jedem Menschen gesehen werden. Mit anderen Worten kann ein solches Raumbild für viele Benutzer unscharf sein, und unter Umständen sogar nicht erkannt werden.

Eine der Erfindung zu Grunde liegende Aufgabe ist das Bereitstellen eines gut erkennbaren und gut erreichbaren Bedienelements.

Die gestellte Aufgabe wird durch das erfindungsgemäße Verfahren und die erfindungsgemäßen Vorrichtungen gemäß der nebengeordneten Patentansprüche gelöst. Vorteilhafte Weiterbildungen sind durch die Unteransprüche gegeben.

Die Erfindung basiert auf der Idee, ein reelles Bild eines Anzeigeelements durch ein Überlagern mehrerer Lichtwellen bereitzustellen. Das reelle Bild legte dadurch in einem Raum vor einer Anzeigefläche eine Anzeige- und Bedienvorrichtung und damit näher an einem Benutzer der Anzeige- und Bedienvorrichtung. Durch die Erfindung kann ein dreidimensionaler Körper dargestellt werden, wodurch ein Bedienkonzept natürlicher und intuitiver ausgeführt werden kann. Bei einem solchen Anzeigeelement können sowohl auf einer Vorderseite, als auch auf einer Hinter- oder Rückseite des angezeigten Körpers Funktionen abgelegt werden, womit auf kleinem Raum mehrere Funktionen abgebildet werden können. Mit einer solchen Anzeige- und Bedienvorrichtung können sehr viele Informationen auf kleinem Raum gezeigt werden. Umfasst die Anzeige- und Bedienvorrichtung auch eine Bedieneinrichtung oder ist die Anzeige- und Bedienvorrichtung mit einer solchen gekoppelt, können mehrere Funktionen auf kleinem Raum abgelegt und bedient werden. Ist das Anzeigeelement ein Bedienelement, so ist es für den Fahrer leicht erreichbar und er muss sich nicht oder wenig zu der Anzeige- und Bedienvorrichtung hinbewegen. Hierdurch wird eine Fahrsicherheit deutlich erhöht, denn der Fahrer kann auch beim Bedienen des Anzeigeelements bequem sitzen bleiben und bestens auf die Straße schauen. Außerdem entfällt die Notwendigkeit, einen Festkörper als Bedienelement bereitzustellen, beispielsweise einen Knopf oder einen Dreh-Drück-Steller, zum Beispiel aus einem Kunststoff oder aus einem Metall, an dem sich der Fahrer aus Versehen anstoßen könnte. Bei einer Gestenerkennung kann ein solches Anzeigeelement auch als Positionierhilfe für zum Beispiel eine Hand dienen.

Durch die Implementierung einer Lichtwelleninterferenz können sich schnell bewegende Bilder bereitgestellt werden. Durch den Wegfall von Festkörper-Bedienelementen haben Interieurs von Kraftfahrzeugen eine luftigere Atmosphäre. Ein beispielhaftes, durch das erfindungsgemäße Verfahren bereitgestelltes Bedienmenü als Anzeigeelement ist sehr übersichtlich zu bedienen.

Das erfindungsgemäße Verfahren zum Betreiben einer Anzeige- und Bedienvorrichtung, die vorzugsweise eine Anzeige- und Bedienvorrichtung eines Kraftfahrzeugs sein kann, weist die folgenden, durch eine Steuereinrichtung der Anzeige- und Bedienvorrichtung durchgeführten Schritte auf. Unter einer Steuereinrichtung wird dabei ein Gerät oder eine Gerätekomponente verstanden, die zum Empfangen und Auswerten von Signalen eingerichtet ist, sowie zum Erzeugen von Steuersignalen. Die Steuereinrichtung kann zum Beispiel als Steuergerät oder Steuerchip ausgestaltet sein.

Es erfolgt ein Vorgeben einer graphischen Ausgestaltung eines durch die Anzeige- und Bedienvorrichtung anzuzeigenden Anzeigeelements. Das Anzeigeelement ist ein anzuzeigendes Bedienelement. Mit anderen Worten wird durch die Steuereinrichtung zum Beispiel ein Bild eines Bedienelements vorgegeben, zum Beispiel ein anzuzeigendes Bild eines Dreh-Drück-Stellers.

Anhand der vorgegebenen graphischen Ausgestaltung erfolgt ein Ermitteln jeweils mindestens eines Lichtwellenparameters zu jeweils einer Lichtwelle einer Gruppe von Lichtwellen, wobei jeder der Lichtwellenparameter eine physikalische Eigenschaft der jeweiligen Lichtwelle beschreibt. Lichtwellenparameter sind die Frequenz, Amplitude oder Wellenlänge der Lichtwelle. Eine Gesamtheit der Lichtwellenparameter beschreibt dabei ein Interferenzmuster, das ein zumindest teilweises Überlagern von mindestens zwei der Lichtwellen oder von Lichtwellenpaaren oder von Lichtwellengruppen zum Erzeugen eines Abbilds des anzuzeigenden Anzeigeelements beschreibt. Mit anderen Worten beschreibt das Interferenzmuster, in welcher Art und Weise sich jeweils mehrere Lichtwellen überlagern, sodass durch die dadurch entstehende Interferenz ein Bild des Anzeigeelements entsteht, also eine Wiedergabe der graphischen Ausgestaltung.

In Abhängigkeit davon erfolgt ein Erzeugen eines Interferenzmustersignals, das die Gesamtheit der ermittelten Lichtwellenparameter beschreibt, das, mit anderen Worten, das Interferenzmuster beschreibt. Das erzeugte Interferenzmustersignal wird an eine Interferenzausgabeeinrichtung der Anzeige- und Bedienvorrichtung ausgegeben, also an eine Gerätekomponente oder ein Bauteil zum Ausgeben mindestens einer Lichtwelle.

Das Verfahren weist weiterhin den durch eine Interferenzausgabeeinrichtung durchgeführten Schritt des Erzeugens einer Lichtwelleninterferenz in Abhängigkeit von dem übertragenen Interferenzmustersignal auf. Dadurch erfolgt das Ausgeben eines reellen Bildes des anzuzeigenden Anzeigeelements durch die Interferenzausgabeeinrichtung. Das Erzeugen der Lichtwelleninterferenz kann vorzugsweise durch Erzeugen mehrerer Lichtwellen den jeweiligen Lichtwellenparameter erfolgen. Mit anderen Worten kann die Interferenzausgabeeinrichtung vorzugsweise ein Erzeugen einer Gruppe von Lichtwellen und ein Einstellen des jeweiligen, ermittelten Lichtwellenparameters für jede der Lichtwellen durchführen.

Es ergeben sich die oben genannten Vorteile. Das anzuzeigende Anzeigeelement kann in unterschiedlichen Abständen und/oder Ausrichtungen zu der Anzeigefläche und dadurch in einem Raum außerhalb der Anzeige- und Bedienvorrichtung angezeigt werden. Hierdurch kann das Abbild des Anzeigeelements zum Beispiel näher an einem Benutzer oder weiter von einem Benutzer weg dargestellt werden.

Dies ist insbesondere in Verbindung mit einer Gestenbedienung sehr vorteilhaft ausgeprägt, da dann ein Bedienbereich zum Bedienen eines Kraftfahrzeugsystems mittels des Anzeigeelements mit einem Anzeigebereich, also demjenigen räumlichen Bereich, in dem das Anzeigeelement angezeigt wird, individuell eingestellt werden kann. Die beiden Bereiche können zum Beispiel nebeneinander oder nah beieinander angeordnet sein, oder sich zumindest teilweise überschneiden. Diese besonderen Vorteile werden durch eine Ausführungsform des erfindungsgemäßen Verfahrens erreicht, bei dem die Steuereinrichtung ein Bediensignal aus einer Bedieneinrichtung empfängt, nämlich einer Gestenerkennungseinrichtung, wobei das Bediensignal eine von der Bedieneinrichtung erkannte Bedienhandlung, nämlich eine Bediengeste, des Benutzers beschreibt. Unter einer Bedieneinrichtung wird dabei ein Gerät oder eine Gerätekomponente verstanden, die zum Erfassen und Erkennen von Bedienhandlungen ausgelegt und eingerichtet ist. Hierzu kann zum Beispiel eine als Gestenerkennungseinrichtung ausgestaltete Bedieneinrichtung zum Beispiel eine Kamera aufweisen, die den Bedienbereich filmen kann, also denjenigen Bereich, in dem der Benutzer die beispielhafte Bediengeste ausführen muss, damit sie als Bediengeste erkannt werden kann. Zusätzlich kann die beispielhafte Gestenerkennungseinrichtung eine geeignete Gestenerkennungssoftware aufweisen.

Anhand des bereitgestellten Bediensignals erfolgt durch die Steuereinrichtung ein Feststellen einer durch die erkannte Bedienhandlung beschriebene Lage- und/oder Positionsänderung des reellen Bilds des Anzeigeelements, und, in Abhängigkeit von der beschriebenen Lage-und/oder Positionsänderung, ein Anpassen mindestens eines Lichtwellenparameters zum Ändern des Interferenzmusters. Mit anderen Worten kann beispielsweise bei einer erkannten Bediengeste zum Drehen eines dreidimensionalen gezeigten Bedienelements zum Beispiel ermittelt oder berechnet werden, in welcher Weise sich das Anzeigeelement drehen soll. Zum Darstellen dieser Drehung des Anzeigeelements kann dann das Interferenzmuster so geändert werden, dass eine Drehung des Anzeigeelements ausgegeben wird.

Das Anzeigeelement zeigt eine Stelle an, an der beim Benutzen der Anzeige- und Bedieneinrichtung ein Körperteil des Benutzers das Anzeigeelement an dem Anzeigeelement anliegen kann, also an der das Körperteil eine Anzeigeebene des angezeigten Anzeigeelements schneiden kann.

Optional kann ein Anteil des Anzeigeelements, an dem ein Körperteil des Benutzers zum Durchführen der Bedienhandlung angeordnet ist, markiert sein, also graphisch hervorgehoben sein.

Vorzugsweise können der Anzeigebereich und der Bedienbereich sich zumindest teilweise überschneiden oder überlappen, oder nebeneinanderliegen. Um dem Benutzer eine Positionierhilfe bereitzustellen, also eine Hilfestellung, damit der Benutzer weiß, an welcher Stelle er die Bediengeste ausführen muss, damit diese von der Gestenerkennungseinrichtung erkannt werden kann, kann gemäß einer weiteren, bevorzugten Ausführungsform des erfindungsgemäßen Verfahrens ein Erzeugen eines haptisch und/oder taktil wahrnehmbaren Felds in und/oder an dem Bedienbereich erfolgen. Dieser Schritt kann durch eine Berührungsauslöseeinrichtung durchgeführt werden, die vorzugsweise eine Einrichtung der Anzeige- und Bedienvorrichtung und/oder der Bedieneinrichtung sein kann. Unter einer Berührungsauslöseeinrichtung wird ein Gerät oder eine Gerätekomponente zum Erzeugen einer physikalischen Größe verstanden, wobei die physikalische Größe dazu geeignet ist, bei Auftreffen auf eine Haut eines Benutzers eine haptische und/oder taktile Rückmeldung auszulösen. Mit anderen Worten kann die Berührungsauslöseeinrichtung durch die physikalische Größe ein haptisch und/oder taktil wahrnehmbares Feld erzeugen, das in der Luft liegt und nicht als Festkörper ausgestaltet ist.

Die Berührungsauslöseeinrichtung kann hierzu beispielsweise als Ultraschalleinrichtung ausgestaltet sein, also als Gerät oder Gerätekomponente zum Erzeugen von akustischen Wellen, vorzugsweise Ultraschallwellen. Das entscheidende Bauteil einer solchen Ultraschalleinrichtung zum Erzeugen der akustischen Wellen ist dabei ein Schallgeberelement, das vorzugsweise als Schallgeber ausgestaltet sein kann. Eine solche Berührungsauslöseeinrichtung kann ein sogenanntes "akustisches Feld" erzeugen.

Alternativ oder zusätzlich kann die Berührungsauslöseeinrichtung zum Beispiel als Luftstromerzeugungseinrichtung ausgestaltet sein, also als Gerät oder Gerätekomponente zum Erzeugen eines Luftstromes oder eines Luftsto-βes. Eine solche Berührungsauslöseeinrichtung kann vorzugsweise ein Luftstromerzeugungselement aufweisen, also ein Bauteil oder eine Bauteilgruppe zum Erzeugen eines Luftstromes oder eines Luftdruckes, beispielsweise durch Zirkulieren, Pumpen oder Pressen von Luft, oder es können mehrere gerichtete Luftströme bereitgestellt werden, die sich an einem Ort oder an einer Stelle treffen können, wo die taktile Rückmeldung erfolgen soll.

Durch das haptische und taktil wahrnehmbare Feld kann ein Feedback bereitgestellt werden. In einer Weiterbildung hierzu kann vorzugsweise eine Vibration an einem Kontaktpunkt des Körperteils und dem Anzeigeelement erzeugt werden, und/oder ein Anteils des Anzeigeelements kann an einem Kontaktpunkt mit dem Körperteil des Benutzers graphisch hervorgehoben werden. Der Anteil mit dem Kontaktpunkt kann beispielsweise dicker oder dichter oder opaker als ein anderer Anteil des Anzeigeelements dargestellt werden.

Zusätzlich oder alternative kann durch die Berührungsauslöseeinrichtung ein Markieren eines Anteils des Anzeigeelements, der den Kontaktpunkt umfasst, durchführen. Dem Benutzer wird so eine optische Positionierhilfe bereitgestellt.

Das erzeugte Interferenzmustersignal beschreibt eine Ausgestaltung eines Bedienelements. Das erzeugte Interferenzmustersignal beschreibt ein dreidimensionales Bedienelement. Die Vorteile zu einer dreidimensionalen Ausgestaltung wurden bereits oben detailliert erläutert. Bei der Ausgestaltung des Anzeigeelements als Bedienelement kann die bereits zuvor beschriebene, vorteilhafte Bedienung eines Systems, vorzugsweise eines Kraftfahrzeugsystems, implementiert werden. Vorzugsweise kann vorgesehen sein, dass das erzeugte Interferenzmustersignal mehrere dreidimensionale Anzeigeelemente beschreiben kann.

Ein Feedback kann optional zusätzlich erzeugt werden, wobei das Feedback zum Beispiel eine oder mehrere Farben; und/oder eine größenbedingte Funktion; und/oder ein "Klick"-Geräusch; und/oder eine haptische Rückmeldung in zum Beispiel einem Kraftfahrzeugsitz sein kann. Der berührte Anteil oder Teil des Anzeigeelements oder Hologramms kann optional anders als ein nichtberührter Anteil dargestellt werden, zum Beispiel in einer anderen Farbe und/oder in einer anderen Größe und/oder zum Beispiel pulsierend.

Die oben gestellte Aufgabe wird gelöst durch eine Steuereinrichtung, die dadurch gekennzeichnet ist, dass sie zum Durchführen der die Steuereinrichtung betreffenden Verfahrensschritte eines Verfahrens nach einer der vorhergehenden beschriebenen Ausführungsformen eingerichtet ist. Es ergeben sich die oben genannten Vorteile. Die Steuereinrichtung kann vorzugsweise eine Prozessoreinrichtung aufweisen, also ein Bauteil oder eine Geräte Komponente zur elektronischen Datenverarbeitung. Die Prozessoreinrichtung kann vorzugsweise mindestens einen Mikrokontroller und/oder mindestens einen Mikroprozessor aufweisen. In einer Speichereinrichtung, also in einem Datenspeicher, kann ein Programmcode abgelegt sein, der bei Ausführen durch die Prozessoreinrichtung die Steuereinrichtung dazu zu veranlassen, die oben beschriebenen Verfahrensschritte einer der Ausführungsformen des erfindungsgemäßen Verfahrens in Bezug auf die Steuereinrichtung durchzuführen. Optional kann der Programmcode bei Ausführen durch die Prozessoreinrichtung die Bedieneinrichtung und/oder die Berührungsauslöseeinrichtung dazu zu veranlassen kann, die entsprechenden Verfahrensschritte durchzuführen.

Die oben gestellte Aufgabe wird gelöst durch eine Anzeige- und Bedienvorrichtung, die eine Interferenzausgabeeinrichtung aufweist, wobei die Interferenzausgabeeinrichtung dazu ausgestaltet ist, in Abhängigkeit von einem Interferenzmustersignal eine Gruppe von Lichtwellen zu erzeugen und einen jeweiligen Lichtwellenparameter einzustellen. Die Anzeige- und Bedienvorrichtung weist eine Ausführungsform der erfindungsgemäßen Steuereinrichtung auf. Es ergeben sich die oben genannten Vorteile. Optional kann die Anzeige- und Bedienvorrichtung eine Berührungsauslöseeinrichtung zum Erzeugen eines haptisch und/oder taktil wahrnehmbaren Feldes in einem Bedienbereich aufweisen, wobei die Berührungsauslöseeinrichtung mindestens ein Schallgeberelement und/oder mindestens ein Luftstromerzeugungselement aufweisen kann. Das haptisch und/oder taktil wahrnehmbare Feld kann bei der Ausgestaltung mit einem Schallgeberelement ein akustisches Feld sein. Es ergeben sich die oben genannten Vorteile.

Optional kann die Anzeige- und Bedienvorrichtung eine Bedieneinrichtung zum Erfassen und Erkennen einer Bedienhandlung in dem Bedienbereich aufweisen, vorzugsweise eine Gestenerkennungseinrichtung. Auch hier ergeben sich die bereits genannten Vorteile.

Die oben gestellte Aufgabe wird gelöst durch ein Kraftfahrzeug, das eine Ausführungsform der erfindungsgemäßen Anzeige- und Bedienvorrichtung weist, und/oder eine Ausführungsform der erfindungsgemäßen Steuereinrichtung.

Das Kraftfahrzeug vorzugsweise als Kraftwagen ausgestaltet sein, beispielsweise als Personenkraftwagen.

Die Erfindung umfasst auch die Kombinationen der beschriebenen Ausführungsformen.

Im Folgenden sind Ausführungsbeispiele der Erfindung beschrieben. Hierzu zeigt:
- Fig. 1: eine schematische Darstellung zu einer ersten Ausführungsform des erfindungsgemäßen Verfahrens und der erfindungsgemäßen Anzeige- und Bedienvorrichtung;
- Fig. 2: eine schematische Darstellung zu einer weiteren Ausführungsform des erfindungsgemäßen Verfahrens und der erfindungsgemäßen Anzeige- und Bedienvorrichtung;
- Fig. 3: eine schematische Darstellung zu einer weiteren Ausführungsform des erfindungsgemäßen Verfahrens und der erfindungsgemäßen Anzeige- und Bedienvorrichtung;
- Fig. 4: eine schematische Darstellung zu einer weiteren Ausführungsform des erfindungsgemäßen Verfahrens und der erfindungsgemäßen Anzeige- und Bedienvorrichtung;
- Fig. 5: eine schematische Darstellung zu einer weiteren Ausführungsform des erfindungsgemäßen Verfahrens und der erfindungsgemäßen Anzeige- und Bedienvorrichtung; und
- Fig. 6: eine schematische Darstellung zu einer weiteren Ausführungsform des erfindungsgemäßen Verfahrens und der erfindungsgemäßen Anzeige- und Bedienvorrichtung.

Bei den im Folgenden erläuterten Ausführungsbeispielen handelt es sich um bevorzugte Ausführungsformen der Erfindung.

In den Figuren sind funktionsgleiche Elemente jeweils mit denselben Bezugszeichen versehen.

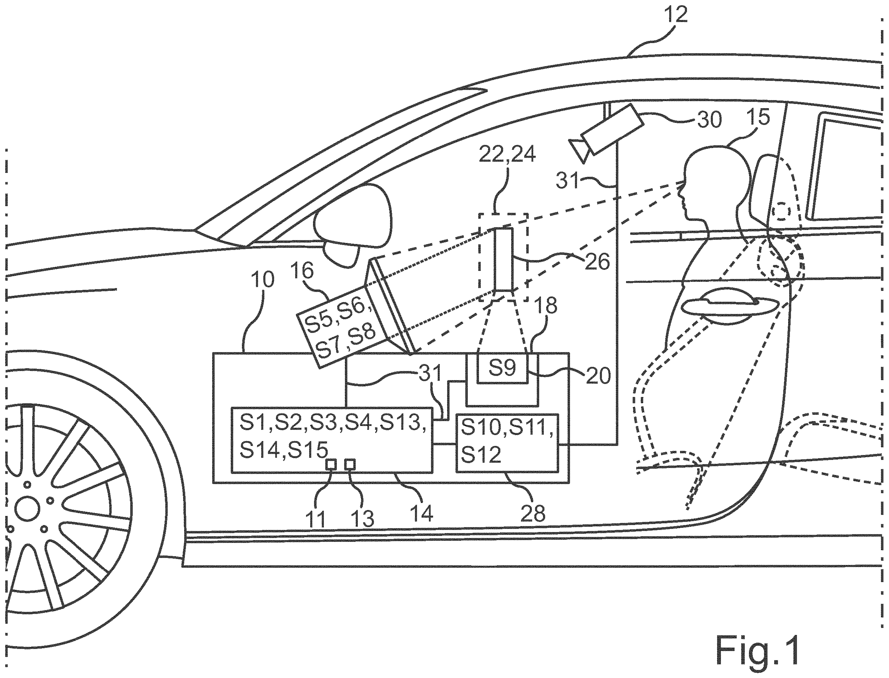

Die Fig. 1 veranschaulicht das Prinzip des erfindungsgemäßen Verfahrens und der erfindungsgemäßen Anzeige- und Bedienvorrichtung 10 anhand eines ersten Ausführungsbeispiels. Die Anzeige- und Bedienvorrichtung 10 kann dabei beispielsweise in zum Beispiel einer Mittelkonsole oder in einer Schalttafel eines Kraftfahrzeugs 12 verbaut sein, wobei das Kraftfahrzeug zum Beispiel als Personenkraftwagen ausgestaltet sein kann. Die Anzeige- und Bedienvorrichtung 10 kann beispielsweise eine optionale Prozessoreinrichtung 11 und eine optionale Speichereinrichtung 13 aufweisen, wobei die Speichereinrichtung 13 zum Beispiel als Speicherkarte oder Speicherchip ausgestaltet sein kann. Im Beispiel Fig. 1 sind dabei sowohl die Prozessoreinrichtung 11, als auch die Speichereinrichtung 13, als optionaler Bestandteil der Steuereinrichtung 14 gezeigt, jedoch können beide Komponenten auch außerhalb der Steuereinrichtung 14 angeordnet sein. Die Steuereinrichtung 14 kann beispielsweise als Steuerplatine ausgestaltet sein.

Die beispielhafte Anzeige- und Bedienvorrichtung 10 der Fig. 1 weist eine Interferenzausgabeeinrichtung 16 auf, die vorzugsweise einen holographischen Generator oder mehrere holographische Generatoren aufweisen kann. Die Interferenzausgabeeinrichtung 16 ist zum Erzeugen einer Lichtwelleninterferenz ausgestaltet und eingerichtet. Die Interferenzausgabeeinrichtung 16 kann hierzu eine oder mehrere Lichtwellen oder Lichtwellengruppen erzeugen und ausgeben. Die einzelnen Lichtwellen oder Lichtwellengruppen können derart in ihren Lichtwellenparametern variiert werden, dass sich zwei oder mehrere Lichtwellen überlagern können. Alternativ oder zusätzlich können die Lichtwellen oder Lichtwellengruppen derart gelenkt werden, dass eine solche Überlagerung erfolgen kann. Entsprechende Geräte sind dem Fachmann aus dem Stand der Technik bekannt. Die Interferenzen, also Überlagerungen, erzeugen einen oder mehrere Bildpunkte vor der Anzeigefläche (in der Fig. 1 nicht gezeigt), oder dahinter. Mit anderen Worten entsteht ein Bildpunkt dort, wo sich zwei oder mehr Lichtwelle treffen. Durch eine Kombination von vielen Punkten ergibt sich dadurch ein Bild. Im Unterschied zu einem Hologramm ist das Bild der Interferenzausgabeeinrichtung 16 nicht statisch.

Mit anderen Worten kann dort, wo sich zwei oder viele hohe Amplituden von Lichtwellen treffen, ein Lichtpunkt entstehen, der im Raum aktiv gesteuert werden kann. Diese Steuerung kann dreidimensional und/oder farbabhängig erfolgen. Diese Licht- oder Bildpunkte entstehen dabei wirklich im Raum, d.h. es sind keine virtuellen Punkte. Mit anderen Worten handelt es sich um ein reelles Bild. Vorteilhaft können die Bildpunkte aktiv gesteuert werden, sodass sich bewegende Bilder entstehen, die zum Beispiel wie reale leuchtende Leuchtkörper erscheinen können.

Das Beispiel der Fig. 1 zeigt eine optionale Berührungsauslöseeinrichtung 18, die zum Beispiel zum Erzeugen von kleinen Luftstößen ausgestaltet sein kann. Alternativ kann die Berührungsauslöseeinrichtung 18 als Ultraschalleinrichtung ausgestaltet sein, die ein Schallgeberelement 20 aufweisen kann. Das Schallgeberelement 20 kann beispielsweise ein Membransender sein. Ein solches Schallgeberelement kann auch als Schallgeber oder als Signalgeber bezeichnet werden. Vorzugsweise kann das Schallgeberelement einer Anordnung oder Matrix mehrerer Schallgeber oder Signalgeber aufweisen, also als ein sogenanntes "Signalgeber-Array" oder "Schallgeber-Array" ausgestaltet sein, vorzugsweise als Ultraschall-Array. Geeignete Gerätekomponenten oder Geräte zum Erzeugen eines haptischen und taktil wahrnehmbaren Feldes, eines sogenannten "akustischen Felds", sind dem Fachmann aus dem Stand der Technik bekannt, beispielsweise von "Ultrahaptics". Vorzugsweise kann das beispielhafte Schallgeberelement 20 ein Array von mehreren Ultraschallsensoren sein, das im Stand der Technik für Parkhilfesysteme verwendet wird.

Das beispielhafte Schallgeberelement 20 kann im Beispiel der Fig. 1 auf einen Bedienbereich 22 ausgerichtet sein, also denjenigen Bereich, in den der Benutzer 15 beispielhaft seine Hand halten muss, damit eine Bediengeste erkannt werden kann. Alternativ zu der Bedienung über eine Bediengeste ist auch eine Bedienung über beispielsweise ein Touchpad oder eine Spracheingabe oder enen Drehregler denkbar, das mit der Anzeige- und Bedienvorrichtung 10 verbunden sein kann.

Im Beispiel der Fig. 1 kann der Bedienbereich 22 mit einem Anzeigebereich 24 übereinstimmen, oder der Bedienbereich 22 kann beispielsweise dem Anzeigebereich 24 vorgelagert sein, d.h. neben dem Anzeigebereich 24 liegen, in den die Interferenzausgabeeinrichtung 16 das Bild ausgibt, das auch als Interferenz-Bild bezeichnet werden kann.

Das in dem Anzeigebereich angezeigte Objekt oder Anzeigeelemente 26 kann beispielsweise ein Bild eines Dreh-Drück-Stellers sein. Ein solches Bild eines Bedienelements kann beispielsweise zum Einstellen einer Funktion einer Klimaanlage oder zum Navigieren durch ein Bedienmenü bereitgestellt werden.

Bei der optionalen Bedienung durch eine Bediengeste kann eine Gestenerkennungseinrichtung 28 vorgesehen sein, die beispielhaft als Bestandteil der Anzeige- und Bedienvorrichtung 10 gezeigt ist. Die Gestenerkennungseinrichtung 28 kann beispielsweise eine an einem Dachhimmel des Kraftfahrzeugs 12 angeordnete Kamera 30 aufweisen, oder mit einer solchen beispielhaften Kamera 30 verbunden sein. Geeignete Gerätekomponenten und Software zur Gestenerkennung sind dem Fachmann aus dem Stand der Technik bekannt. Die beispielhafte Kamera 30 ist vorzugsweise auf den Bedienbereich 22 ausgerichtet.

In Kombination mit dem akustischen Feld bringt die Gestenerkennung den Vorteil, dass, wie bereits weiter oben beschrieben, ein Körperteil, dessen Bediengeste erkannt werden soll, exakt positioniert werden kann. Damit wird die Erkennung der Geste verbessert. Zusätzlich oder alternativ kann zum Beispiel vorgesehen sein, dass ein Benutzer 15 seine Hand zum Bedienen auf eine Handauflage auflegen muss, zum Beispiel auf eine berührungssensitive Oberfläche ("Touchpad"). Die Gestenerkennungseinrichtung 28 kann dazu eingerichtet sein, zwischen beispielsweise einer unbewussten, den Bedienbereich "suchenden" oder einer sich zufällig bewegenden Hand, oder einer bedienenden Hand zu unterscheiden. Alternativ zu der Ausführung der Gestenerkennung mithilfe der Kamera 30 kann zur Gestenerkennung beispielsweise ein Radar, oder eine Infrarotkamera verwendet werden.

In einem ersten Verfahrensschritt S1 kann eine grafische Ausgestaltung des beispielhaften Bedienelements vorgegeben werden, beispielsweise durch Bereitstellen von dreidimensionalen Grafikdaten. Diese Grafikdaten können zum Beispiel in der Speichereinrichtung 13 abgelegt sein, oder zum Beispiel von einem kraftfahrzeugexternen Datenserver (in der Fig. 1 nicht gezeigt) abgerufen werden. Die beispielhaften Grafikdaten können dann ausgelesen werden. Bei diesem beispielhaften Auslesevorgang kann ermittelt werden, welche Eigenschaften die Lichtwellen haben und/oder wie sie ausgelenkt sein müssen, um über Lichtwellen-Interferenz das gewünschte Bild des Bedienelements zu erzeugen. Das Ermitteln eines oder mehrerer Lichtwellenparameter S2 kann beispielsweise auf Erfahrungswerte beruhen oder aus der grafischen Datei abgelesen werden. Beispielhafte Lichtwellenparameter können dabei eine Amplitude oder eine Frequenz oder eine Wellenlänge sein. Bei einer Gruppe von durch die Interferenzausgabeeinrichtung 16 erzeugten Lichtwellen können zu jeder der Lichtwellen ein oder mehrere Lichtparameter ermittelt werden (S2) und beispielsweise anhand einer vorprogrammierten Vorgabe kann so das Interferenzmuster festgelegt werden. Mit anderen Worten kann das Interferenzmuster das Bild des beispielhaften Bedienelements beschreiben.

Die Steuereinrichtung 14 erzeugt das Interferenzmustersignal, das dieses Muster und/oder die jeweiligen Lichtwellenparameter beschreibt (S3).

Das erzeugte Interferenzmustersignal wird an die Interferenzausgabeeinrichtung 16 übertragen (S4). Datenkommunikationsverbindungen 31 sind in der Fig. 1 als schwarze Verbindungslinien gezeigt und können beispielsweise für eine drahtlose Datenübertragung ausgestaltet sein, beispielsweise als WLAN- oder Bluetooth-LE-Verbindung. Alternativ kann eine Datenkommunikationsverbindung 31 drahtgebunden sein, d.h. beispielsweise als Kabel oder Datenbus ausgestaltet sein.

In Abhängigkeit von dem übertragenen Interferenzmustersignal werden die Lichtwellen durch die Interferenzausgabeeinrichtung 16 gesteuert (S5), wozu beispielsweise vorgegebene Lichtwellenparameter eingestellt werden können (S6). Hierdurch wird eine Lichtwelleninterferenz erzeugt oder bereitgestellt (S7), also das reelle Bild des beispielhaften Bedienelements ausgegeben (S8).

Wird durch die optionale Berührungsauslöseeinrichtung 18 ein akustisches Feld erzeugt (S9), wird dem Benutzer 15 geholfen, den Bedienbereich 22 zu finden. Das akustische Feld löst beim Auftreffen auf die Haut das Gefühl einer Berührung aus und kann beispielsweise dem Benutzer 15 damit vermitteln, dass sich seine Hand im oder am Bedienbereich 22 befindet.

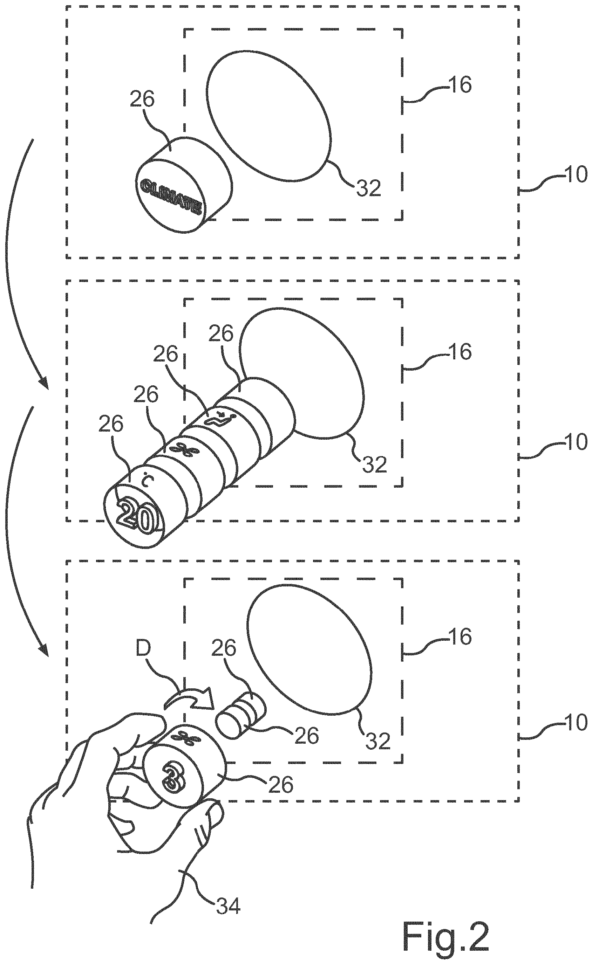

Die Fig. 2 zeigt ein weiteres Ausführungsbeispiel einer erfindungsgemäßen Anzeige- und Bedienvorrichtung 10, die zum Beispiel derjenigen aus dem Beispiel der Fig. 1 entsprechen kann. Aus Gründen der Übersichtlichkeit sind dabei die beispielhafte Gestenerkennungseinrichtung 28 und die Berührungsauslöseeinrichtung 18 nicht mehr gezeigt. Deswegen ist in den einzelnen Teilabbildungen der Fig. 2 auch die Steuereinrichtung 14 nicht gezeigt. Im Folgenden wird dabei nur auf die Unterschiede zu der Funktionsweise in der Fig. 1 eingegangen.

Die Interferenzausgabeeinrichtung 16 des Beispiels der Fig. 2 kann eine Anzeigefläche 32 aufweisen, die optional als holographischer Bildschirm ("holographisches Display") ausgestaltet sein kann. Auf beispielhaft einer dem Benutzer 15 zugewandten Seite kann zum Beispiel ein rundes, scheibenförmiges Anzeigeelement 26 anzeigen (oberer Teil der Fig. 2).

Das Anzeigeelement 26 kann beispielsweise Auswählen der Klimaanlagenfunktion sein. Zum Auslösen dieser Funktion kann beispielsweise vorgesehen sein, dass der Benutzer 15 eine Hand 34 eine Zeit lang an oder auf das Anzeigeelemente 26 halten kann, und/oder zum Beispiel eine Antipp-Geste macht, oder zum Beispiel eine Wisch-Geste. Bei einer beispielhaften Antipp-Geste, bei der zwei Finger benutzt werden, kann einer Fehlbedienung wirksam vorgebeugt oder eine solche sogar vermieden werden. Beispielhafte alternative Bedienfunktionen können zum Beispiel diejenigen eines Navigationsgeräts oder eines Radios sein.

Die Gestenerkennungseinrichtung 28 kann mittels eines entsprechenden Signals aus der Kamera 30 die Bediengeste erfassen (S10), und mithilfe der beispielhaften Gestenerkennungssoftware die Geste erkennen (S11).

Vorzugsweise kann ein Bedienkonzept bereitgestellt werden, bei dem durch ein "Anfassen" und/oder "Antippen" (also durch eine Anfass-Geste und/oder durch eine Antippgeste) des Anzeigeelements 26 mehrere Unterfunktionen der ausgelösten Funktion, der beispielhaften Klimaanlagenbedienung, bereitgestellt werden, und hierzu das einzelne Anzeigeelement 26 durch vier Anzeigeelemente 26 (mittlerer Teil der Fig. 2) ersetzt wird. Die beispielhaften vier Anzeigeelemente 26 können dann mit jeweils einer Unterfunktion belegt sein, beispielsweise einer Einstellung einer Temperatur, einer Gebläsestärke, einer Gebläserichtung, und einer zusätzlichen Extrafunktion. Mit anderen Worten kann sich das Menü "entfalten".

Es ist ebenfalls eine Hand 34 des Benutzers 15 gezeigt, die gerade eine Bediengeste durchführen kann. Bedient der Benutzer 15 mit dieser dann beispielsweise die Temperatureinstellung durch Drehen mithilfe einer Drehbewegung (D), kann er innerhalb des Temperaturmenüs eine spezifische Temperatur auswählen und verstellen. Die gerade aktive Unterfunktion kann dabei durch ein Anzeigeelement 26 präsentiert werden, das größer ist als zwei weitere Anzeigeelemente 26, die die anderen Unterfunktionen repräsentieren können (unterer Teil der Fig. 2).

Dabei kann das Zuordnen der Bediengeste zu dem "gedrehten" Anzeigeelement 26, und damit zu der zu aktivierenden Funktion, beispielsweise anhand des Kamerabildes zugeordnet werden. Die Gestenerkennungseinrichtung 28 kann ein Bediensignal erzeugen (S12), das die Bediengeste und/oder die auszulösende Funktion beschreiben kann. Hierdurch kann das erzeugte Bediensignal bereitgestellt werden (S13).

Beschreibt die beispielhafte Bediengeste beispielsweise eine Drehbewegung D, kann eine entsprechende Drehbewegung des Anzeigeelements 26 festgestellt werden (S14). Optional kann vorgesehen sein, dass die Gestenerkennung zum Beispiel eine Länge der Drehbewegung erfassen kann, und eine entsprechende visuell dargestellte Drehbewegung des Anzeigeelements 26 anpassen kann.

Die Lichtwellenparameter können dazu derart angepasst werden (S15), dass sich das Interferenzmuster derart ändert, dass sich das Bild des Anzeigeelements 26 dreht.

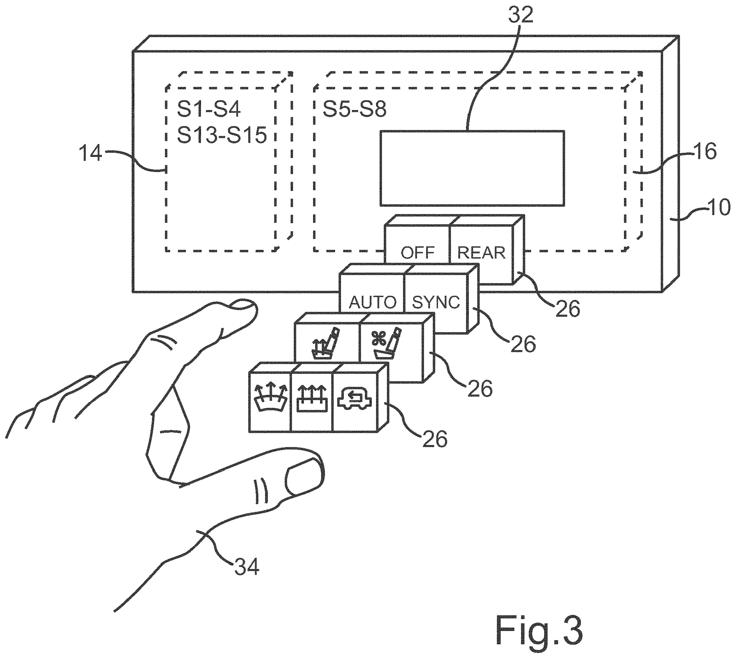

Die Fig. 3 zeigt ein weiteres Ausführungsbeispiel zu einem weiteren Bedienkonzept. Die einzelnen Komponenten der Anzeige- und Bedienvorrichtung 10 sind der besseren Übersicht wegen nicht alle dargestellt. Grundsätzlich kann es sich aber bei der Anzeige- und Bedienvorrichtung 10 der Fig.3 zum Beispiel um eine Anzeige- und Bedienvorrichtung 10 der Fig. 1 handeln. Das Bedienkonzept der Fig. 3 kann optional mit dem Bedienkonzept der Fig. 2 kombinierbar sein.

Die Fig. 3 zeigt eine beispielhafte Anzeigefläche 32, die optional als holographisches Display oder als interferometrisches Display" bezeichnet werden kann. Beispielhaft kann die Interferenzausgabeeinrichtung 16 vier Anzeigeelemente 26 angezeigt, wobei jedes der Anzeigeelemente zwei oder mehr Bereiche aufweisen kann und die jeweiligen Bereiche können unterschiedlichen Bedienfunktionen zugeordnet sein können. Ein Bedienen der einzelnen Funktionen kann dabei beispielsweise durch eine Antipp- oder eine Schiebegeste erfolgen.

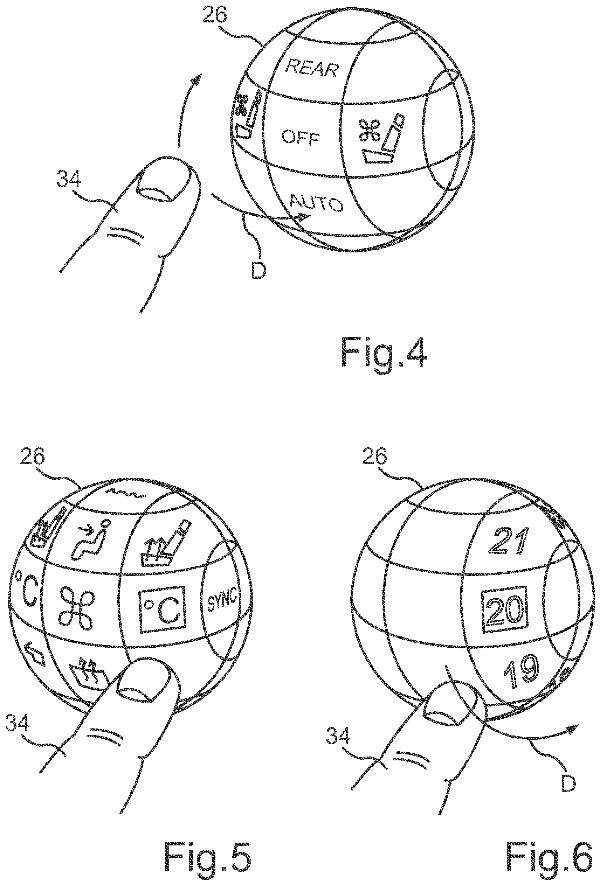

Die Fig. 4, Fig. 5, und Fig. 6 zeigen ein Bedienkonzept mit einem beispielhaft kugelförmig ausgestalteten Anzeigeelement 26, das dreidimensional im Raum gedreht werden kann. Eine mögliche Umsetzung einer Drehgeste in eine Drehbewegung des Anzeigeelements 26 wurde weiter bereits oben beschrieben. Das kugelförmige Bedienelement als Anzeigeelement 26 kann zum Beispiel in unterschiedliche Bereiche unterteilt sein, denen jeweils eine Funktion eines Kraftfahrzeugsystems zugeordnet sein können. Durch die dreidimensionale Ausgestaltung können sowohl auf der Vorderseite, als auch auf der Rückseite, unterschiedliche sogenannte Funktionsbereiche vorliegen. Durch beispielsweise eine Drückgeste auf einen entsprechenden Funktionsbereich kann eine Funktion ausgelöst werden, wobei bei einer Drehgeste D das kugelförmige Anzeigeelemente 26 gedreht werden kann. Sind die unterschiedlichen Funktionsbereiche zum Beispiel durch ein Bild einer Schrift oder ein Bild eines Symbols gekennzeichnet, können auch diese Symbole oder Beschriftungen beim Drehen des Anzeigeelements 26 mit dem Funktionsbereich rotieren.

Im Beispiel der Fig. 4 können beispielsweise Funktionen für einen Kraftfahrzeugsitz bereitgestellt sein, zum Beispiel die Unterfunktionen "rear", "off" und "auto". Diese Bedienfunktionen können beispielsweise zum Auswählen einer Klimaanlage für die Rückbank, eines Ausschaltens oder einer automatischen Einstellung dienen. Bei einem virtuellen Drehen des Anzeigeelements 26 können andere Funktionsbereiche angezeigt werden. Ist das Anzeigeelement 26 gedreht (Fig. 5) können zum Beispiel Funktionen für eine Belüftung oder für eine Temperatureinstellung bereitgestellt werden.

Die Fig. 6 zeigt eine Ausgestaltung des kugelförmigen Anzeigeelements 26, das zum Beispiel als Walze ausgestaltet sein kann, nach beispielsweise einer Einstellung einer Temperatur durch zum Beispiel eine Drück-Geste (Fig. 5).

Optional kann vorgesehen sein, dass zu einer Eingewöhnung in das Bedienkonzept eine sogenannte Lernphase vorgesehen sein kann, in der der Benutzer 15 lernen kann, mit der erfindungsgemäßen Anzeige- und Bedienvorrichtung umzugehen. Der Benutzer 15 kann so sein motorisches Gedächtnis schulen und beispielsweise eine optimale Geschwindigkeit zum Drehen eines Anzeigeelements 26 erlernen, oder zu lernen, wo auf dem Anzeigeelement 26 eine bestimmte Funktion sein kann. Zum Lernen kann beispielsweise durch die Berührungsauslöseeinrichtung 18 ein haptisches Feedback erzeugt werden, um den Benutzer 15 beim Lernen zu unterstützen.

Optional kann vorgesehen sein, dass das Anzeigeelement 26 oder mehrere Anzeigeelemente 26 für beispielsweise einen Beifahrer verstellbar sein können. Dabei kann die Position und/oder die Lage des Anzeigeelements 26 verändert werden, vorzugsweise solange es in einem Sichtkegel sichtbar sein kann. Befindet sich die Anzeige- und Bedienvorrichtung 10 beispielsweise in einer Schalttafel eines Kraftfahrzeugs 12, kann für einen Fahrer das Anzeigeelement 26 derart positioniert werden, dass ein Blick senkrecht auf die Anzeigefläche 32 fallen kann. Mit anderen Worten kann die Anzeigefläche 32 auf den Benutzer 15 ausgerichtet sein. Bei einer großen Anzeige- und Bedienvorrichtung 10 können beispielsweise mehrere Insassen die Anzeigefläche 32 und/oder das Anzeigeelement 26 gleichzeitig sehen. Eine Position und/oder Lage kann zum Beispiel manuell durch den Benutzer 15 einstellbar sein. Hierdurch ist die Anzeige- und Bedienvorrichtung 10 sehr ergonomisch gestaltet.

Insgesamt veranschaulichen die Ausführungsbeispiele ein holographisches Bedienkonzept, das auf einem virtuellen 3D-Körper basieren kann, und womit durch ein Input-Medium oder Bedienelement wie zum Beispiel ein Dreh-Drück-Steller oder Touchpad, über zum Beispiel eine Gestenerkennung auf diesem Körper navigiert werden kann.

Gemäß einem weiteren Ausführungsbeispiel (Fig. 2) kann die Interferenzausgabeeinrichtung 16, die optional einen holographischen Generator aufweisen kann, mithilfe des beispielhaften holographischen Generators 3-D-Bilder vor einer Anzeigefläche 32 erzeugen. Über vorzugsweise eine Gestenerkennung kann beispielsweise ein Menü "angefasst" und bedient werden. Eventuell kann dies durch eine Haptik durch zum Beispiel Luftstoßen oder Ultraschall ergänzt werden. Zuerst kann der Benutzer 15 beispielsweise einen dreidimensionalen Körper für zum Beispiel ein Einstellen eines Klimas sehen. Durch beispielsweise Anfassen (oder eine Anfass-Geste) kann sich dieser Körper des Anzeigeelements 26 und sich in mehrere Körper, also in mehrere Anzeigeelemente 26, die jeder eine Funktion darstellen oder repräsentieren können, entfalten. Durch beispielsweise Anfassen und/oder Selektieren kann zum Beispiel ein Wert geändert werden.

Die Fig. 3 beschreibt, gemäß einem weiteren Ausführungsbeispiel, Objekte oder Anzeigeelemente 26, die in der Luft "schweben" zu scheinen. Die Bildpunkte sind dabei real, nicht virtuell. Dabei können alternativ die Anzeigeelemente 26 als "Blätter" für zum Beispiel verschiedene Medien oder Kontakte dargestellt sein, durch die der Benutzer 15 mit einer "Blätter-Geste" blättern kann. Jedes der Anzeigeelemente 26 kann optional ein Textfeld mit einem Menütext aufweisen (zum Beispiel: "est leucocyte", "est sushi in shoeshop", "est goldwrap", "est dodge the dodo", "est stränge phase").

Die Fig. 4, Fig. 5, und Fig. 6 zeigen für ein weiteres Ausführungsbeispiel einen Ball als Anzeigeelement 26, das zum Beispiel mit allen Klimafunktionen "in der Luft schweben" kann (Fig. 4). Die in der Fig. 4 gezeigte Seite des Anzeigeelements 26 kann beispielsweise eine Hinterseite sein. Hierzu zeigt die Fig. 5 beispielhaft eine entsprechende Vorderseite und durch zum Beispiel Drehen und/oder Anfassen kann eine Funktion gesucht werden.

Die Fig. 6 zeigt hierzu beispielhaft ein Selektieren und Verstellen eines Wertes.

Mit anderen Worten kann der beispielhafte Ball wirklich dreidimensional im Raum "schweben", und an beispielsweise einer Hinterseite können ebenfalls Funktionen angezeigt werden. So können auf kleinem Raum mehrere Funktionen abgebildet werden.

Gemäß einem weiteren Ausführungsbeispiel können zum Beispiel mit einem Eingabeinstrument Funktionen nach einer Lernphase blind bedient werden. Beispielhaft können mit drei Klick-Gesten nach rechts und einer Klick-Geste nach oben eine Sitzheizung ausgewählt und/oder eingestellt werden.

## Patentansprüche

1. Verfahren zum Betreiben einer Anzeige- und Bedienvorrichtung (10), wobei das Verfahren die folgenden, durch eine Steuereinrichtung (14) der Anzeige- und Bedienvorrichtung (10) durchgeführten Schritte aufweist:
- Vorgeben einer graphischen Ausgestaltung eines durch die Anzeige- und Bedienvorrichtung (10) anzuzeigenden Bedienelements (26, S1),
- anhand der vorgegebenen graphischen Ausgestaltung: Ermitteln jeweils mindestens eines Lichtwellenparameters zu jeweils einer Lichtwelle einer Gruppe von Lichtwellen (S2), wobei jeder der Lichtwellenparameter eine Frequenz, eine Amplitude oder eine Wellenlänge der jeweiligen Lichtwelle beschreibt, und wobei eine Gesamtheit der Lichtwellenparameter ein Interferenzmuster beschreibt, das ein zumindest teilweises Überlagern der Lichtwellen zum Erzeugen eines Abbilds des Bedienelements (26) beschreibt,
- Erzeugen eines Interferenzmustersignals, das die Gesamtheit der ermittelten Lichtwellenparameter beschreibt (S3), wobei das erzeugte Interferenzmustersignal eine Ausgestaltung eines dreidimensionalen Bedienelements als das Bedienelement beschreibt, und
- Übertragen des erzeugten Interferenzmustersignals an eine Interferenzausgabeeinrichtung (16) der Anzeige- und Bedienvorrichtung (10, S4),
das Verfahren weiterhin aufweisend den durch die Interferenzausgabeeinrichtung (16) durchgeführten Schritt:
- in Abhängigkeit von dem übertragenen Interferenzmustersignal: Erzeugen einer Lichtwelleninterferenz (S7), und dadurch
- Ausgeben eines reellen Bildes des anzuzeigenden Bedienelements (26, S8), wobei das Verfahren die folgenden durch die Steuereinrichtung (14) durchgeführten Schritte aufweist:
- Bereitstellen eines Bediensignals aus einer Gestenerkennungseinrichtung (28), das eine Bediengeste eines Benutzers (15) beschreibt (S13),
- anhand des bereitgestellten Bediensignals: Feststellen einer durch die Bediengeste beschriebene Lage- und/oder Positionsänderung des reel-Ien Bilds des Bedienelements (26, S14), und
- in Abhängigkeit von der beschriebenen Lage- und/oder Positionsänderung: Anpassen mindestens eines Lichtwellenparameters (S15) zum Ändern des Interferenzmusters, **dadurch gekennzeichnet, dass** das Bedienelement (26) eine Stelle anzeigt, an der ein Körperteil (34) des Benutzers (15) an dem Bedienelement (26) anliegt.

2. Verfahren nach einem der vorhergehenden Ansprüche, wobei das Verfahren durch den folgenden, durch eine Berührungsauslöseeinrichtung (18) durchgeführten Schritt gekennzeichnet ist:
- Erzeugen eines haptisch und taktil wahrnehmbaren Felds in und/oder an einem Bedienbereich (22, S9); vorzugsweise einer Vibration an einem Kontaktpunkt des Körperteils und dem Bedienelement (26), und/oder einem an dem Kontaktpunkt graphisch hervorgehobenen Anteils des Anzeigelements (26).

3. Steuereinrichtung (14), die **dadurch gekennzeichnet ist, dass** sie in Verbindung mit einer Interferenzausgabeeinrichtung (16) und einer Gestenerkennungseinrichtung (28) zum Durchführen der die Steuereinrichtung (14) betreffenden Verfahrensschritte eines Verfahrens nach einem der vorhergehenden Ansprüche eingerichtet ist.

4. Anzeige- und Bedienvorrichtung (10), aufweisend eine Interferenzausgabeeinrichtung (16), wobei die Interferenzausgabeeinrichtung (16) dazu ausgestaltet ist, in Abhängigkeit von einem Interferenzmustersignal eine Gruppe von Lichtwellen zu erzeugen und einen jeweiligen Lichtwellenparameter einzustellen, und aufweisend eine Gestenerkennungseinrichtung (28) zum Erfassen und Erkennen einer Bediengeste in einem Bedienbereich (22),
wobei die Anzeige- und Bedienvorrichtung (10) durch eine Steuereinrichtung (14) nach Anspruch 3 gekennzeichnet ist.

5. Anzeige- und Bedienvorrichtung (10) nach Anspruch 4, die
eine Berührungsauslöseeinrichtung (18) zum Erzeugen eines haptisch und taktil wahrnehmbaren Felds in einem Bedienbereich (22) aufweist, wobei die Berührungsauslöseeinrichtung (18) mindestens ein Schallgeberelement und/oder mindestens ein Luftstromerzeugungselement aufweist.

6. Kraftfahrzeug (12), **gekennzeichnet durch** eine Anzeige- und Bedienvorrichtung (10) nach einem der Ansprüche 4 oder 5, und/oder eine Steuereinrichtung (14) nach Anspruch 3.

## Claims

1. A method for operating a display and actuation device (10), wherein the method comprises the following steps performed by a control device (14) of the display and actuation device (10):
- presetting a graphic configuration of an actuation element (26) to be displayed by the display and actuation device (10) (S1),
- based on the preset graphic configuration: ascertaining each at least one light wave parameter to each one light wave of a group of light waves (S2), wherein each of the light wave parameters describes a frequency, an amplitude or a wavelength of the respective light wave, and wherein an entirety of the light wave parameters describes an interference pattern, which describes an at least partial superposition of the light waves for generating a picture of the actuation element (26),
- generating an interference pattern signal, which describes the entirety of the ascertained light wave parameters (S3), wherein the generated interference pattern signal describes a configuration of a three-dimensional actuation element as the actuation element, and
- transferring the generated interference pattern signal to an interference output device (16) of the display and actuation device (10, S4),
the method further comprising the step performed by the interference output device (16):
- depending on the transferred interference pattern signal: generating a light wave interference (S7), and thereby
- outputting a real image of the actuation element (26) to be displayed (S8), wherein the method comprises the following steps performed by the control device (14):
- providing an actuation signal, which describes an actuation gesture of a user (15), from a gesture recognition device (28) (S13),
- based on the provided actuation signal: determining a pose and/or position change, described by the actuation gesture, of the real image of the actuation element (26, S14), and
- depending on the described pose and/or position change: adapting at least one light wave parameter (S15) for changing the interference pattern, **characterized in that** the actuation element (26) displays a location, at which a body part (34) of the user (15) abuts on the actuation element (26).

2. The method according to any one of the preceding claims, wherein the method is **characterized by** the following step performed by a touch initiation device (18):
- generating a haptically and tactilely perceptible field in and/or at an actuation area (22, S9); preferably a vibration at a contact point of the body part and the actuation element (26), and/or at a portion of the display element (26) graphically highlighted at the contact point.

3. A control device (14), which is **characterized in that** it is configured in connection with an interference output device (16) and a gesture recognition device (28) for performing the method steps, relating to the control device (14), of a method according to any one of the preceding claims.

4. A display and actuation device (10) comprising an interference output device (16), wherein the interference output device (16) is configured to generate a group of light waves depending on an interference pattern signal and to adjust a respective light wave parameter, and comprising a gesture recognition device (28) for capturing and recognizing an actuation gesture in an actuation area (22),
wherein the display and actuation device (10) is **characterized by** a control device (14) according to claim 3.

5. The display and actuation device (10) according to claim 4, which comprises a touch initiation device (18) for generating a haptically and tactilely perceptible field in an actuation area (22), wherein the touch initiation device (18) comprises at least one sound generator element and/or at least one airflow generating element.

6. A motor vehicle (12) **characterized by** a display and actuation device (10) according to any one of claims 4 or 5, and/or a control device (14) according to claim 3.

## Revendications

1. Procédé pour faire fonctionner un dispositif d'affichage et de commande (10), le procédé comportant les étapes suivantes réalisées par un dispositif de commande (14) du dispositif d'affichage et de commande (10) consistant à :
- prédéfinir une présentation graphique d'un élément de commande (26, S1) à afficher par le dispositif d'affichage et de commande (10),
- sur la base de la présentation graphique prédéfinie : déterminer respectivement au moins un paramètre d'onde lumineuse pour une onde lumineuse respective d'un groupe d'ondes lumineuses (S2), chacun des paramètres d'ondes lumineuses décrivant une fréquence, une amplitude ou une longueur d'onde de l'onde lumineuse respective, et un ensemble des paramètres d'ondes lumineuses décrivant un motif d'interférence qui décrit une superposition au moins partielle des ondes lumineuses pour générer une image de l'élément de commande (26),
- générer un signal de motif d'interférence qui décrit (S3) l'ensemble des paramètres d'ondes lumineuses déterminés, le signal de motif d'interférence généré décrivant une présentation d'un élément de commande tridimensionnel en tant qu'élément de commande, et
- transmettre le signal de motif d'interférence généré à un dispositif de sortie d'interférence (16) du dispositif d'affichage et de commande (10, S4),
le procédé comportant en outre l'étape réalisée par le dispositif de sortie d'interférence (16) consistant à :
- en fonction du signal de motif d'interférence transmis : générer une interférence d'onde lumineuse (S7), et ainsi
- délivrer en sortie une image réelle de l'élément de commande (26, S8) à afficher, le procédé comportant les étapes suivantes réalisées par le dispositif de commande (14) consistant à :
- fournir un signal de commande provenant d'un dispositif de reconnaissance gestuelle (28) qui décrit (S13) un geste de commande d'un utilisateur (15),
- sur la base du signal de commande fourni : établir un changement d'emplacement et/ou de position de l'image réelle de l'élément de commande (26, S14) décrit par le geste de commande, et
- en fonction du changement d'emplacement et/ou ou de position décrit : adapter au moins un paramètre d'onde lumineuse (S15) pour changer le motif d'interférence, **caractérisé en ce que** l'élément de commande (26) indique un endroit où une partie corporelle (34) de l'utilisateur (15) s'applique contre l'élément de commande (26).

2. Procédé selon l'une des revendications précédentes, le procédé étant **caractérisé par** l'étape suivante réalisée par un dispositif de déclenchement par contact (18) consistant à :
- générer un champ perceptible de façon haptique et tactile dans et/ou sur une zone de commande (22, S9) ; de préférence une vibration au niveau d'un point de contact de la partie corporelle et de l'élément de commande (26), et/ou une partie de l'élément d'affichage (26) graphiquement mise en évidence au niveau du point de contact.

3. Dispositif de commande (14), **caractérisé en ce qu'**il est configuré pour réaliser, en liaison avec un dispositif de sortie d'interférence (16) et un dispositif de reconnaissance gestuelle (28), les étapes de procédé concernant le dispositif de commande (14) d'un procédé selon l'une des revendications précédentes.

4. Dispositif d'affichage et de commande (10), comportant un dispositif de sortie d'interférence (16), le dispositif de sortie d'interférence (16) étant conçu pour générer un groupe d'ondes lumineuse en fonction d'un signal de motif d'interférence et pour régler un paramètre d'onde lumineuse respectif, et comportant un dispositif de reconnaissance gestuelle (28) pour détecter et reconnaître un geste de commande dans une zone de commande (22),
le dispositif d'affichage et de commande (10) étant **caractérisé par** un dispositif de commande (14) selon la revendication 3.

5. Dispositif d'affichage et de commande (10) selon la revendication 4, comportant un dispositif de déclenchement par contact (28) pour générer un champ perceptible de façon haptique et tactile dans une zone de commande (22), le dispositif de déclenchement par contact (18) comportant au moins un élément générateur de son et/ou au moins un élément générateur d'écoulement d'air.

6. Véhicule à moteur (12), **caractérisé par** un dispositif d'affichage et de commande (10) selon l'une des revendications 4 ou 5, et/ou un dispositif de commande (14) selon la revendication 3.
